Europäisches Patentamt

**European Patent Office**

Office européen des brevets

(19)

(11) Publication number: **0 118 637**
**A2**

(12) # EUROPEAN PATENT APPLICATION

(21) Application number: **83306134.4**

(22) Date of filing: **11.10.83**

(51) Int. Cl.³: **C 09 K 3/10**
**C 09 D 5/34, C 04 B 25/02**
**C 08 L 31/04**

(30) Priority: **14.02.83 US 466196**

(43) Date of publication of application:
**19.09.84 Bulletin 84/38**

(84) Designated Contracting States:
**DE FR GB NL SE**

(71) Applicant: **HERCULES INCORPORATED**
**Hercules Plaza**
**Wilmington Delaware 19899(US)**

(72) Inventor: **Desmarais, Armand Joseph**
**3419 Pebble Beach Drive**
**Fairway Falls Wilmington Delaware 19808(US)**

(74) Representative: **De Minvielle-Devaux, Ian Benedict**
**Peter et al,**
**CARPMAELS & RANSFORD 43, Bloomsbury Square**
**London WC1A 2RA(GB)**

(54) **Tape joint cement composition.**

(57) Tape joint cement composition suitable for use with wallboard is disclosed wherein hydroxypropyl hydroxyethyl cellulose having specified substitution levels is employed as the water retention aid and thickener.

EP 0 118 637 A2

- 1-

## TAPE JOINT CEMENT COMPOSITION

This invention relates to compositions useful as tape joint sealing materials for the installation of wallboard paneling in residential, commercial, and industrial buildings. More specifically, it refers to such compositions wherein a cellulose derivative is employed to impart desirable properties thereto.

Since the end of the second World War, the use of wallboard has all but displaced plaster in erection of interior walls in the construction of buildings. Wallboard is generally installed in 4 x 8 foot panels which are nailed and glued to the studding of the wall and fitted together until the entire section of wall is covered. The joints where sections of board are butted together are covered with tape and then the taped joints and all nails are covered with a joint cement or spackling compound which, upon hardening, can be sanded smooth so that the taped joint is imperceptible when the wall is covered with paint or wallpaper.

At first, the joint cements employed with wallboard contained a resinous binder, limestone, clay, mica, a water-soluble polymer and asbestos as the principal ingredients, which were mixed with water to form a dope. Asbestos was included in these formulations for several purposes. Its primary functions, however, were to impart pseudoplasticity and to prevent sag when applied in a thick layer.

Over the past several years evidence that certain types of asbestos appear to have carcinogenic characteristics has led to its being banned altogether. Both prior to and when the ban became effective, efforts were made to find substitutes and many materials were evaluated as asbestos replacements. Today, the overwhelming product of choice in the joint cement industry to prevent sag is attapulgite clay.

Attapulgite clay is acicular and has an extremely high surface area in relationship to its weight. Hence, all water soluble polymers used as thickeners or water retention aids in joint cements are attracted to the surface of the clay particles to some degree. The extent or degree of adsorption of the water soluble polymer on the surface of the attapulgite clay is related to the charge of the polymer, the density of the charge, and the hydrogen bonding capability of the polymer.

Absorption of the water-soluble polymer on the surface of the attapulgite clay can lead to mild flocculation which may manifest itself as "livering" in the joint cement. The flocculated particles leave crevices or voids which, when the cement is dried, result in cracks on the surface of the cement.

Prior to the change from asbestos to attapulgite clay, cellulose derivatives, namely, methylhydroxypropyl cellulose (MHPC) and hydroxyethyl cellulose (HEC) were the principal thickeners used in joint cements. After the change to attapulgite clay, MHPC became the favored thickener since HEC absorbs on the surface of the attapulgite clay at about twice the rate as MHPC.

According to this invention, joint cement compositions based on a resinous binder, mica, at least one clay, such as bentonite, kaolin and attapulgite clays, and limestone are improved by the addition of a water-soluble hydroxypropyl hydroxyethyl cellulose having a hydroxyethyl substitution from about 0.7 to about 4.0 M.S. and a hydroxypropyl substitution greater than 0.36 M.S. as a water retention aid. The hydroxypropyl substitution is preferably greater than 0.6 M.S. Most preferably, the hydroxyethyl M.S. will be from 0.8 to about 1.8 and the hydroxypropyl M.S. will be from about 0.8 to about 1.5. The molecular substitution (M.S.) is defined as the average number of moles of hydroxyethyl or hydroxypropyl substituent groups present per anhydroglucose unit. The hydroxypropyl hydroxyethyl cellulose of this invention has less tendency to absorb on the surface of clays, primarily attapulgite, than either HEC or MHPC.

Joint cements are marketed as fully formulated, ready-to-use cement, i.e., already containing water, and as a dry powder to which water is added at the time of use. The invention includes such dry powders as well as the fully formulated cements. Joint cement compositions of this invention are substantially equivalent in performance to those which are presently available commercially.

In commercial practice the concentrations of the principal ingredients can and do vary widely between suppliers and depending on the intended end use, i.e., whether it is for patching holes, covering nail pops, or for initially covering taped joints. In most commercial formulations, the principal ingredients, which should add up to 100%, are within the following concentration ranges:

| Ingredients | % by weight based on the dry ingredients |
|---|---|
| Limestone | 40 to 95 |
| Mica | 2 to 10 |
| Kaolin Clays | 1 to 20 |
| Attapulgite Clays | 1 to 8 |
| Binder (solids) | 2 to 15 |
| Thickener | 0.2 to 2.0 |

Bentonite clays can be used to replace all or part of the attapulgite clay.

If the product is to be sold as a ready-mix formulation, water in the amount of about 22% to about 35%, based on the total weight of the composition, is added and thoroughly mixed.

All compositions within the limits described above are suitable for manual application by troweling. When they are to be applied mechanically, additional water can be added at the job site just prior to use.

The modified hydroxyethyl cellulose which can be used as thickeners in the cements of this invention is prepared by reacting ethylene oxide and propylene oxide with cellulose in a strongly alkaline medium. Specific techniques for carrving out the etherification are well known in the art and any known procedure can be employed.

In the alternative, a hydroxyethyl cellulose can be etherified with a propylene oxide in a strongly alkaline medium. In this case, the hydroxyethyl cellulose can be substantially any grade having M.S. from about 0.7 to about 4.0. The preferred materials are those having a viscosity from about 400 to about 5000 centipoise in a 1% water solution. Materials of higher and lower viscosity can also be used advantageously, however.

The concentration of the hydroxypropyl hydroxyethyl cellulose in the composition of this invention is from about 0.2% to about 2.0% by weight based on the dry ingredients. Desirably the hydroxypropyl hydroxyethyl cellulose is present at a concentration of from about 0.5% to about 1.0%.

The resinous binder is normally a coalescable vinyl material, preferably poly(vinyl acetate) or an ethylene-vinyl acetate copolymer, which upon drying or curing of the cement forms a thin matrix to hold the clay, limestone, etc. together. When a fully formulated mix is being prepared, an aqueous latex binder is usually added. In the case of dry mixes, the binder is added as dried resin particles. Other materials useful as the binder include, e.g., starch, casein, polyvinyl alcohol, polyacrylamide, and copolymers of acrylamide and acrylic acid.

In addition to the principal ingredients mentioned above, a typical joint cement will frequently also contain small amounts of conventional additives, such as dispersants, defoamers, preservatives, pH control agents, and processing aids to improve open time. Suitable dispersants include the polymerized alkaline salts of a sulfonic acid. Silica dispersed in a liquid hydrocarbon is a typical defoamer. Typical preservatives include 1-(3-chloroallyl-triaza-1-azoniaadamantane)chloride. Alkaline salts may be used as pH control agents. Propylene glycol is a suitable process aid to improve open time.

Small amounts of polyacrylamide can be added to further improve the sag resistance of the cement.

The following examples are illustrative of the invention. All parts and percentages used in this disclosure are by weight unless otherwise indicated.

### Example 1

The following example illustrates a specific embodiment of the joint cement composition of this invention and how to prepare it.

A joint cement using the formulation set forth in Table I is prepared by charging a mixing apparatus with the water and latex binder and mixing for a short time (about 1 min.). The defoamer, preservative, and processing aid are then added.

All of the dry ingredients are dry blended by tumbling in a tumbler, and then incrementally adding the dry mixture to the stirred liquids.

After the addition of the dry ingredients is complete, the mix is stirred for about 10 minutes at low speed with occasional stopping to scrape down the sides of the bowl or until a homogeneous mixture is obtained.

TABLE I

| Ingredients | % by weight based on the ingredients minus water |
|---|---|
| Limestone | 83.5 |
| Mica | 6.5 |
| Attapulgite clay | 3.4 |
| Latex binder (solids) | 3.35 |
| Defoamer | 0.2 |
| Preservative | 0.05 |
| Alkaline salt | 0.9 |
| Propylene glycol | 1.5 |
| Hydroxypropyl hydroxylethyl cellulose (0.93 hydroxyethyl M.S.; 1.17 hydroxypropyl M.S.) | 0.6 |
| Water | 33.6* |

*By weight of the total composition

### Example 2

In Examples 2 to 7, the procedure of Example 1 and the formulation of Table 1 are used except that a hydroxypropyl hydroxyethyl cellulose having the hydroxyethyl M.S. and the hydroxypropyl M.S. shown in Table II for the particular example in question is used instead.

To characterize the compositions of this invention, the following tests are used:

Viscosity: measured in Brabender units (B.U.) determined by ASTM C474-67.

Cracking: Panels are dried in an essentially vertical position with a current of air from a 14 inch oscillating fan forced across their face from about 30 inches for 45 minutes. The panels are then allowed to dry overnight in the vertical position without the air current. Ratings are assigned subjectively as: 1 = none, 2 = very slight, 3 = slight, 4 = moderate, and 5 = severe.

Sag resistance: Panels of the cement about 4 x 5 x 1/8 inch are cast. Sag resistance is rated as good, fair or poor by observing the degree of slump of the sharp edges of the cast cement.

Adhesion: Determined according to ASTM C474-67.

Appearance (texture): The appearance or texture is observed and ratings are assigned as: 1 = smooth, creamy, 2 = very slight grainy, 3 = slightly grainy, 4 = moderate grainy, and 5 = very grainy.

Gelation (livering): A subjective test in which the amount of gelation observed is rated using the same ratings as used for the cracking test above.

Adsorption on clay: A standard curve of each polymer to be tested is prepared by taking solutions at 0.05, 0.025, 0.01, 0.005, 0.0025, 0.0005, and 0.00025% concentrations; placing 1.0 ml of each solution into separate test tubes; adding 1.0 ml of a 5.0% phenol solution to each test tube and mixing thoroughly by shaking; adding 5.0 ml of concentrated $H_2SO_4$ to each test tube and mixing thoroughly by shaking; letting the tubes stand for 10 minutes; reshaking; placing the tubes in a water bath at 25°C. for 20 minutes; measuring the optical density at 490 nm on a B&L spectrometer; and plotting the concentration vs. optical density.

The clay adsorption is measured by adding 10.0 g of a sheared clay slurry at 10.0% concentration plus 9.0 g distilled water to a centrifuge tube; adding 18 g of a polymer solution at 0.05% concentration to the tube; mixing contents by shaking; letting the tube stand for 2 hours; reshaking; centrifuging at 10,000 RPM in a Sorvall centrifuge for 30 minutes; taking 1.0 ml of clear supernatant liquid and repeating the procedure given in the preceding paragraph; and determining the concentration in the supernatant by plotting on standard curve.  The concentration of polymer adsorbed on the clay can be determined by difference between the polymer concentration originally and the polymer concentration in the supernatant.

The concentration of the clay slurry or the polymer solution or both may have to be varied depending upon the degree of polymer adsorption on the clay surface.

The properties of the compositions of Examples 1 through 7 are shown in Table II.

Table II

| Example Number | HE M.S. | HP M.S. | Viscosity | Cracking[A] | Sag Resistance[C] | Adhesion | Appearance[B] | Gelation[A] (livering) | Adsorption on Clay |
|---|---|---|---|---|---|---|---|---|---|
| 1 | 0.93 | 1.17 | 480 | 1 | G | Good | 1 | 1 | 0.0193 |
| 2 | 0.93 | 0.42 | 640 | 1 | G | Good | 5 | 5 | 0.0549 |
| 3 | 0.94 | 1.14 | 400 | 3 | G | Good | 3 | 1 | 0.0300 |
| 4 | 1.31 | 1.08 | 500 | 2 | G | Good | 1 | 1 | 0.0266 |
| 5 | 1.47 | 0.74 | 490 | 1 | G | Good | 1 | 2 | 0.0244 |
| 6 | 1.58 | 1.13 | 480 | 4 | G | Good | 2 | 1 | 0.0199 |
| 7 | 1.77 | 0.83 | 540 | 3 | G | Good | 1 | 2 | 0.0266 |

A. 1 = none  
2 = very slight  
3 = slight  
4 = moderate  
5 = severe

B. 1 = smooth, creamy  
2 = v. sl. grainy  
3 = sl. grainy  
4 = mod. grainy  
5 = very grainy

C. G = good  
F = fair  
P = poor

- 8 -

Features, advantages and other specific embodiments of this invention will become readily apparent to those exercising ordinary skill in the art after reading the foregoing disclosures. In this regard, while specific embodiments of this invention have been described in considerable detail, variations and modifications of these embodiments can be effected without departing from the spirit and scope of the invention as disclosed and claimed.

CLAIMS

1. In a joint cement composition which comprises limestone, mica, at least one clay, and a latex binder as its principal ingredients, the improvement which comprises the addition of from about 0.2% to about 2.0%, by weight based on the dry ingredients, of hydroxypropyl hydroxyethyl cellulose having a hydroxyethyl substitution from about 0.7 to about 4.0 M.S. and a hydroxypropyl substitution greater than 0.36 M.S. as a water retention aid.

2. The composition of claim 1 wherein the hydroxypropyl hydroxyethyl cellulose has a hydroxypropyl substitution greater than 0.6 M.S.

3. The composition of claim 2 wherein the hydroxypropyl hydroxyethyl cellulose has a hydroxyethyl M.S. from about 0.8 to about 1.8 and a hydroxypropyl M.S. from about 0.8 to about 1.5.

4. The composition of claim 1 wherein the hydroxypropyl hydroxyethyl cellulose is present at a concentration from about 0.5% to about 1.0%.

5. In joint cement composition which comprises limestone; mica; a clay selected from the group consisting of attapulgite, bentonite, and mixtures thereof; and a latex binder as its principal ingredients, the improvement which comprises the addition of from about 0.2% to about 2.0%, by weight based on the dry ingredients, of hydroxypropyl hydroxyethyl cellulose having a hydroxyethyl substitution from about 0.7 to about 4.0 M.S. and a hydroxypropyl substitution greater than 0.36 M.S. as a water retention aid.

6. The composition of claim 5 wherein the hydroxypropyl hydroxyethyl cellulose has a hydroxypropyl substitution greater than 0.6 M.S.

7.  The composition of claim 6 wherein the hydroxypropyl hydroxyethyl cellulose has a hydroxyethyl M.S. from about 0.8 to about 1.8 and a hydroxypropyl M.S. from about 0.8 to about 1.5.

8.  The composition of claim 5 wherein the hydroxypropyl hydroxyethyl cellulose is present at a concentration from about 0.5% to about 1.0%.